# EUROPEAN PATENT SPECIFICATION

(11) **EP 4 302 986 B1**
(45) Date of publication and mention of the grant of the patent: **30.07.2025**
(21) Application number: 22183410.4
(22) Date of filing: 06.07.2022
(51) Int. Cl.: B32B 3/18, B32B 3/12, B32B 5/14, B32B 7/022, B32B 5/12

(54) **SANDWICH PANEL WITH UNIDIRECTIONAL COMPOSITE TAPES AND ITS PRODUCTION PROCESS**
SANDWICHPLATTE MIT UNIDIREKTIONALEN VERBUNDBÄNDERN UND IHR PRODUKTIONSVERFAHREN
PANNEAU SANDWICH DOTÉ DES BANDES COMPOSITES UNIDIRECTIONNELLES ET SON PROCÉDÉ DE FABRICATION

(43) Date of publication of application: 10.01.2024
(73) Proprietor: EconCore N.V., 3001 Leuven (BE)
(72) Inventor: PFLUG, Jochen, 65207 Wiesbaden (DE)
(74) Representative: Kirkpatrick

(56) References cited:
- EP-A1- 3 928 974
- WO-A1-2021/167646
- CN-A- 108 045 049
- US-A- 6 039 832

## Description

The present invention relates to optionally large width thermoplastic sandwich panels with composite skins in a 0/90° unidirectional tape layup as well as to the production thereof. The composite skins can be composed of thermoplastic film or sheet material. The present invention relates to rapid production of different widths of completed thermoplastic honeycomb sandwich panels. Thermoplastic film or sheet is preferably joined/laminated by thermoplastic welding to a honeycomb core. Thermoplastic film or sheet is used as a reinforcement and is preferably joined/laminated by thermoplastic welding to a honeycomb core. The honeycomb core is preferably formed from a plurality of polygonal cells arranged in an array, wherein each polygonal cell has lateral cell walls extending between vertices of each polygonal cell.

### Background

The inline lamination of continuously reinforced thermoplastic composite skins onto a thermoplastic honeycomb core results in cost efficient sandwich panels which provide stiffness and strength at minimal weight for use in a wide range of applications in many industries. Continuously produced thermoplastic honeycomb cores, such as folded honeycombs as described in WO 2006/053407 enable significant cost reductions in the large volume production of such sandwich panels.

Typically, woven thermoplastic composite skins or two layers of unidirectional fiber reinforced thermoplastic tapes (UD-tapes) in a 0°/90° layup are applied on each major surface of the honeycomb core to create a sandwich panel with high bending stiffness and strength in both principal directions of the panel. The patent application US2020164624A1 (Wismans, 2018) describes symmetrical laminates. The patent application US2008047121A1 (Rohr, 2008) presents a method of joining composite honeycomb panels sections. Patent application US2022001643A1 (Huaping, 2022) describes further methods to join honeycomb cores prior to skins being applied onto the joint honeycomb cores. US 6 039 832 A discloses a reinforced honeycomb sandwich panel comprising a plurality of honeycomb core sheets having edges and a butt joint between edges of respective laminated reinforced honeycomb core sheets in a side-by-side location of the edges of the laminated reinforced honeycomb core sheets having an increased density at the conjunction of the honeycomb cores, and laminated with multilayered fiber reinforced skins comprising plies with varying fiber orientation including 0° and 90° and a method for its production. EP 3 928 974 A1 discloses an equipment for continuous production of a laminated reinforced honeycomb sandwich panel from a plurality of honeycomb cores including means for joining honeycomb cores and a laminator for laminating by thermoplastic welding multilayer skins to the honeycomb cores.

Continuously produced thermoplastic honeycomb cores enable the in-line production of such sandwich panels. Two layers of thermoplastic tapes are typically laminated together in a double belt laminator and rolled up to form a skin laminate. Such laminates are then laminated onto both sides of the honeycomb core, e.g. in-line during the production of the continuously produced thermoplastic honeycomb core to form composite skins. In this in-line process the width of the resulting sandwich panel is limited to the width of the honeycomb production line and by the width of the laminates and laminators, which need to be available. Hence, the honeycomb cores need to be produced prior to the lamination onto the honeycomb core. This can increase the stock that has to be stored to be available at any time to meet specific customer requirements.

### Summary of the invention

An object of embodiments of the present invention is to enable the production of an optionally large width thermoplastic sandwich panel with composite skins in a 0°/90° unidirectional tape layup. The composite skins can be composed of thermoplastic film or sheet material. Embodiments of the present invention allow rapid production of different widths of completed thermoplastic honeycomb sandwich panels. Thermoplastic film or sheet is used as a reinforcement and is preferably joined/laminated by thermoplastic welding to a honeycomb core.

The honeycomb core is preferably formed from a plurality of polygonal cells arranged in an array, wherein each polygonal cell has lateral cell walls extending between vertices of each polygonal cell. The honeycomb core is preferably a folded honeycomb core. Preferably, each polygonal cell is bounded on two sides by covering-layer planes, the lateral cell walls of each polygonal cell forming a polygonal ring. For half of the cells along one edge of the honeycomb core, the top or bottom of the cell is open and along an opposing edge, for another half of the cells, the top or bottom is closed. This allows on each side edge of the reinforced honeycomb core, a trimming operation to be carried out so that the cells from one reinforced core have open tops and can be cut in half, and joined with cells from an adjacent reinforced core, the cells having closed tops that can be cut in half. These trimmed edges can be pushed together with a certain pressure to provide a reinforcement at the joint between two honeycomb core sheets or honeycomb panels.

Another object of embodiments of the present invention is to enable the production of optionally large width thermoplastic honeycomb panels with thermoplastic composite skins in a 0°/90° reinforced layup which is based on the use of smaller width honeycomb core sheets joined together without a weak spot or without a serious weakening at the joint of separate honeycomb cores or with a reinforced join.

An advantage of the present invention is that a separate lamination step to create the 0°/90° laminates uses a further processing of reinforced honeycomb cores with 0° reinforcement layers on both sides of the honeycomb core with a 90° turned production direction to apply second reinforcement layers on both sides of the honeycomb core again in 0° with respect to the new production direction. This results in the first and second laminates having a 0°/90° lay-up.

The separate lamination steps can be performed at different locations. This has the important advantage that a small-width production of the honeycomb core with first 0° reinforcement layers laminated to the honeycomb core can be fast and cost efficient and the small width panels can be transported easily. The second lamination step to form larger width sandwich panels with finally 0°/90° composite laminate skins can be done locally, e.g. at the location where these panels are joined to a truck trailer box, or other application.

The object or objects is/are achieved in accordance with embodiments of the present invention by the production of intermediate panels with single ply UD-reinforced skins on both sides of a honeycomb core in 0° direction, in-line with the production direction of the continuously produced honeycomb core. Additional UD-reinforced layers laminated in 0° direction after a 90° rotation of the machine direction of the process, are applied to intermediate panels. Preferably, this includes reinforcement at joints between the intermediate panels. This reinforcement can comprise one or more of :
overlapping and/or
interpenetration of adjacent intermediate panels or
the use of adhesive layers or loops at the joints between adjacent intermediate panels.

All of which these methods can form a strong joint. The core density in a small area at the conjunction of two intermediate panels is then higher than the core density in the rest of the intermediate panel. This ensures a good support of the outer layers (sometimes called "skins") and a perfect core-skin bond at the area of the joint.

Embodiments of the present invention provide a reinforced honeycomb sandwich panel comprising: a plurality of honeycomb core sheets having edges, and having a first core density,
first skin layers with 0° fiber reinforcement laminated on both sides of each of the plurality of honeycomb core sheets, to form laminated reinforced honeycomb core sheets,
a butt joint between edges of respective laminated reinforced honeycomb core sheets in a side-by-side location of the edges of the laminated reinforced honeycomb core sheets so that the edges overlap each other or penetrate each other or are deformed to create an area of a second core density higher than the first core density at the conjunction of the laminated reinforced honeycomb cores and of the first skin layers with 0° fiber reinforcement layer above and below a position where the edges of the honeycomb cores join,
second skin layers with 90° fiber reinforcement layer on both sides of the laminated reinforced honeycomb cores on above and below of the 0° fiber reinforced layers, to form a laminated reinforced honeycomb sandwich panel.

Embodiments of the present invention provide a reinforced honeycomb sandwich panel comprising: a plurality of honeycomb core sheets having edges, and having a first core density,
first skin layers with 0° fiber reinforcement laminated on both sides of each of the plurality of honeycomb core sheets, to form laminated reinforced honeycomb core sheets,
a butt joint between edges of respective laminated reinforced honeycomb core sheets in a side-by-side location of the edges of the laminated reinforced honeycomb core sheets so that the edges overlap each other or penetrate each other or are deformed to create an area of a second core density higher than the first core density at the conjunction of the laminated reinforced honeycomb core sheets and of the first skin layers with 0° fiber reinforcement layer above and below a position where the edges of the honeycomb cores join,
second skin layers with 90° fiber reinforcement layers on both sides of the laminated reinforced honeycomb core sheets and on the 0° fiber reinforced layers, to form a laminated reinforced honeycomb sandwich panel.

Embodiments of the present invention provide a method for continuous production of a laminated reinforced honeycomb sandwich panel from a plurality of honeycomb cores as input material, each of the honeycomb cores having two opposed major surfaces, one on each side of each of the honeycomb cores, a further aspect of the method comprising:
applying and laminating, by thermoplastic welding, first skin layers having a first 0° fiber reinforcement layer, one first skin layer being laminated on each major surface of each of the honeycomb cores to form a layered honeycomb core, the first 0° fiber reinforcement layer having fibers that extend in a first machine direction,
cutting the layered honeycomb cores to form first and second intermediate panels having edges continuous and straight,
trimming opposed edges of the first and second intermediate panels to expose edge connections,
rotating the first machine direction through 90° resulting in a second machine direction, without rotating the intermediate panels,
joining a first intermediate panel to a second intermediate panel in continuous production to form a joint of the first and second intermediate panels with a reinforcement at the joint of the first and second intermediate panels, the reinforcement comprising one or more of:
   overlapping or interpenetration of edges of adjacent intermediate panels or use of adhesive layers or loops of adhesive for gluing the first intermediate panel to the second intermediate panel at a butt joint, with optional application of an in-line compression force to on the edge connections of the first and second intermediate panels or completing an adhesive butt joint, and
   applying and laminating by thermoplastic welding, second skin layers with a second 0° fiber reinforcement to the joined first and second intermediate panels, one second skin layer being laminated on each major surface of the first and second intermediate panels to form a laminated reinforced honeycomb core wherein the fiber direction of the second skin layers is 90° to the fiber direction of the first skin layers on each laminated reinforced honeycomb core.

Embodiments of the present invention provide equipment for continuous production of a laminated reinforced honeycomb sandwich panel from a plurality of honeycomb cores as input material, each of the honeycomb cores having two opposed major surfaces, one on each side of each of the honeycomb cores, the equipment comprising:
a first conveyor to convey the input material to a laminator in a first machine direction,
a store for storing first skin layers which are a first 0° fiber reinforcement layer,
a laminator for laminating by thermoplastic welding, the first skin layers, one first skin layer being laminated on each major surface of each of the honeycomb cores to form a layered honeycomb core, the first 0° fiber reinforcement layer having fibers that extend in a first machine direction,
a cutter for cutting the layered honeycomb cores to form first and second intermediate panels having edges continuous and straight,
a trimmer for trimming opposed edges of the first and second intermediate panels to expose edge connections,
a second conveyor having a second machine direction at 90° to the first machine direction, for receiving the layered honeycomb cores without rotating the layered honeycomb cores,
means for joining a first layered honeycomb core to a second layered honeycomb core in continuous production to form a joint of the first and second honeycomb cores with a reinforcement at the joint of the first and second layered honeycomb cores, the reinforcement at the joint comprising one or more of : overlapping or interpenetration of edges of adjacent intermediate panels or use of adhesive layers or loops of adhesive for gluing the first intermediate panel to the second intermediate panel at a butt joint, with optional application of an in-line compression force to on the edge connections of the first and second intermediate panels or completing an adhesive butt joint,
a second store for storing second skin layers having a second 0° fiber reinforcement layer with reference to the second machine direction, the application being onto each side of each of the layered honeycomb cores, and
a second laminator for laminating by thermoplastic welding, the second skin layers, one second skin layer being laminated on each major surface of each of the layered honeycomb cores to form a layered honeycomb core, the second 0° fiber reinforcement layer having fibers that extend in the second machine direction.

For half of the cells along one edge of an intermediate panel or a honeycomb core sheet, the top or bottom of the cell is preferably open and along an opposing edge, for another half of the cells, the top or bottom is closed. This allows on each side edge of the reinforced honeycomb core, or an intermediate panel, a trimming operation can be carried out so that the cells from one reinforced honeycomb core sheet or an intermediate panel have open tops and can be cut in half, and joined with cells from an adjacent reinforced honeycomb core sheet or intermediate panel, the cells of that honeycomb core sheet or intermediate panel having closed tops that can be cut in half. These trimmed edges can be pushed together with a certain pressure. Applying a joint of the first 0° fibre reinforced layers at the location where the honeycomb core sheets penetrate each other, leads to a higher core density local to the join and a substantial improvement of the support for the outer 90° UD layers at this critical location.

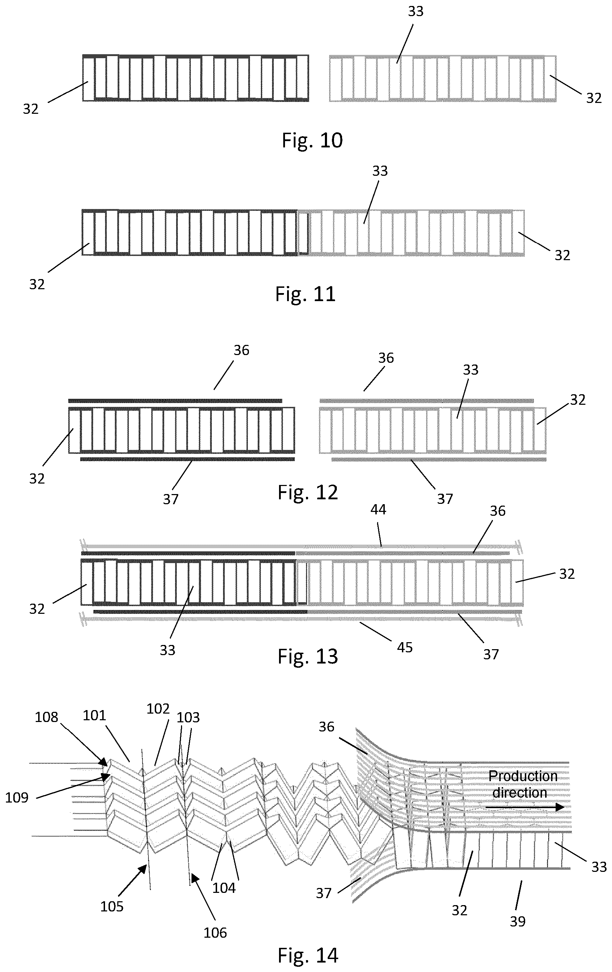

Embodiments of the present invention provide a reinforced honeycomb sandwich panel comprising
a) honeycomb cores, e.g. folded honeycomb cores, as shown in Fig. 14.
b) first skin layers with first 0° fiber reinforcement applied, by lamination (e.g. thermoplastically welded) on both sides of honeycomb cores to form a honeycomb core sheet, the 0° direction being in relation to fiber reinforcement being parallel with a first machine direction, i.e. the production direction.
c) a butt joint or a side-by-side location of edges of the honeycomb core with 0° fiber reinforced layers laminated above and below the position where the edges of the reinforced layers join or the edges are located side-by-side or penetrate each other (e.g. by a few millimeters). Optionally a joint with a small overlap of the 0° fiber reinforced skins layers is included within the scope of the present invention,
d) second skin layers with 90° second fiber reinforcement on both sides of the honeycomb core sheet applied onto the 0° first fiber reinforced skin layers, one second skin layer being laminated on each major surface of the honeycomb core sheet to form a further reinforced honeycomb core sandwich panel. To have the joint of the first UD 0° layers at the location where the edges of honeycomb core sheets penetrate each other provides a reinforcement for the joint and leads to a substantial improvement of the support for the outer 90° UD layers at this location.

Embodiments of the present invention are defined in the appended claims and further developed by further features of the dependent claims.

### Definitions

"Honeycomb core" relates to an array of honeycomb cells forming a sheet whereby the longitudinal axes of the cells are 90° to the sheet. Such a honeycomb core can be manufactured as shown in Fig. 14.

"Honeycomb core sheet" is a honeycomb core with layers (sometimes called skins) laminated to the core on both sides thereof.

"Intermediate panel" is a honeycomb core sheet with its major surfaces laminated to a fiber reinforcing layer such as provided by UD tapes with optionally the cells on at least edge thereof, trimmed to provide connections.

"UD tape" is a fiber reinforced thermoplastic material in film or sheet form which can be laminated (e.g. thermoplastically welded) to a honeycomb core or to another fiber reinforced thermoplastic material in film or sheet form. Such tapes are commercially available, e.g.: https://thermoplasticcomposites.de/en/products/ud-tapes/ https://www.profol.de/ud-tape-proud/.

The company Tencate of California provides a UD tape named Cetex TC960 *(formerly PMC*/*Baycomp CFRT*^{®} *PP)* which is a polypropylene-based thermoplastic unidirectional tape. This thermoplastic composite is designed for applications which require high impact resistance. The impact toughness of glass fiber/polypropylene composites make them ideal for use in truck bodies, vehicles and vehicle enclosures.

Tapes are also provided commercially by the company Sabic, Saudi Arabia, for example. "0° fibre reinforced unidirectional tapes" refers to a tape material reinforced by fibres which extend along the tape. "90° fibre reinforced unidirectional tapes" refers to an additional tape material reinforced by fibres which fibres extend along the tape but the tape is applied with the fibres perpendicular to the fibres of the 0° fibre reinforced unidirectional tapes. A "cross-ply" refers to a layer of 0° fibre reinforced unidirectional tapes whereby fibres extend along the tape with 90° fibre reinforced unidirectional tapes applied in such a way that the fibres of the 0° fibre reinforced unidirectional tapes are 90° to the fibres of the 90° fibre reinforced unidirectional tapes.

### Brief description of the drawings

Fig. 1 shows a sandwich panel with cross-ply skins made from UD-tapes in accordance with an embodiment of the present invention.
Fig. 2 shows a side view of the sandwich panel with cross-ply skins made from UD-tapes in accordance with an embodiment of the present invention.
Fig. 3 shows a sandwich panel with cross-ply skins and an optional adhesive film between the core sheets in accordance with an embodiment of the present invention.
Fig. 4 shows a side view of the sandwich panel with an adhesive film bonded to the core sheets in accordance with an embodiment of the present invention.
Fig. 5 shows a sandwich panel production process with two times UD-tape lamination, in accordance with an embodiment of the present invention.
Fig. 6 shows a sandwich panel production process with two times UD-tape lamination and adhesive films in accordance with an embodiment of the present invention.
Fig. 7a shows a honeycomb core which can be used in any of the embodiments of the present invention. Figures 7b and 7c show joining of two honeycomb cores in accordance with an embodiment of the present invention. Fig. 7b shows two honeycomb cores with trimmed edges, side by side. In Fig. 7c, two honeycomb cores are shown with an overlap in accordance with an embodiment of the present invention, so that the L-cell walls of the left edge of one core sheet are between the W-cell walls and in the honeycomb cells on the right side of the neighboring core sheet.
Fig 8 shows on the left side a 3D image of a honeycomb core with the left and right edge trimmed according to an embodiment of the present invention.
Fig. 9 shows two neighboring honeycomb cores which overlap to create an area of larger core density at the joint.
Fig. 10 shows a side view of two honeycomb cores with the left edge and right edge trimmed according to an embodiment of the present invention.
Fig. 11 shows a side view of two neighboring honeycomb cores which overlap to create an area of larger core density at the joint in accordance with an embodiment of the present invention.
Fig. 12 shows a side view of two intermediate panels made from honeycomb core sheets with the 0° UD tape layers on the honeycomb cores in accordance with an embodiment of the present invention. The 0° UD tape layers are laminated onto the honeycomb core with a small offset e.g., equal to one cell wall width a = c/√3 or half the cell size c.
Fig. 13 shows how neighboring intermediate panels are placed together in accordance with an embodiment of the present invention. The outer UD-tape layers are reinforcements provided by the UD-tape layers being continuous over the connection of the intermediate panels.
Fig. 14 shows a panoramic view of a manufacturing process of a folded honeycomb core with 0° fiber reinforced layers laminated on each side of the completed core as used in embodiments of the present invention.

### Detailed description of the illustrative embodiments

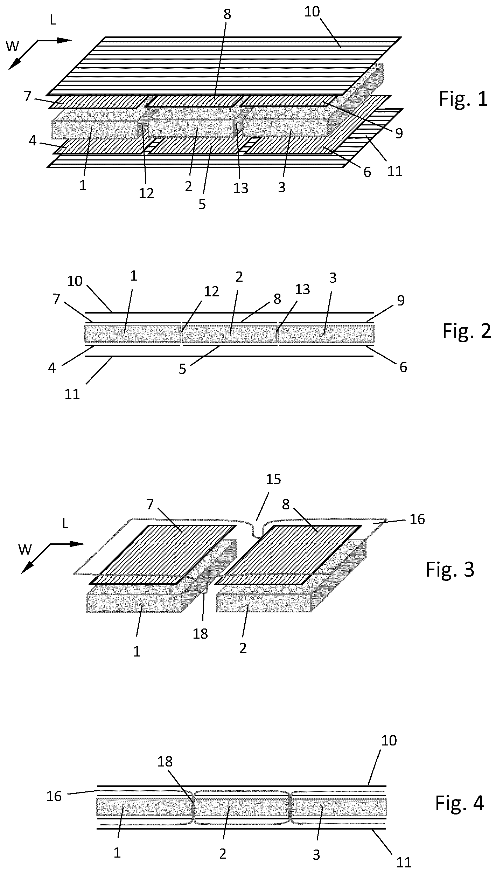

Fig. 1 shows a sandwich panel 10 with upper (7, 8, 9) and lower (4, 5, 6) inner 0° fibre reinforced unidirectional tapes (i.e. UD-tapes) laminated or more preferably thermoplastically welded in the production direction W of the continuously produced honeycomb cores 1, 2, 3 (e.g. the W-direction of a folded honeycomb core). The edges of the honeycomb cores 1, 2, 3 are parallel with the edges of the upper and lower inner 0° UD-tapes 4, 5, 6, 7, 8, 9. These inner 0° UD-tapes 4, 5, 6, 7, 8, 9 have been cut in the length direction by cutting in the cross direction together with cutting the honeycomb cores 1, 2, 3. As shown in Fig. 1 the inner 0° UD-tapes 4, 5, 6, 7, 8, 9 are co-terminous with the honeycomb cores 1, 2, 3. The outer UD-tape layers 10, 11 are continuous in the L-direction and connect the honeycomb cores 1, 2, 3 and the inner 0° UD-tape layers 4, 5, 6, 7, 8, 9 to a larger size sandwich panel. There are mechanical weak points 12, 13 between the finite pieces of honeycomb core 1, 2, 3 in the L direction.

The honeycomb cores can be made from a single sheet. The honeycomb cores and can be composed of a thermoplastic polymer and/or a thermoplastic elastomeric polymer, or a thermoplastic polymer selected from a group consisting of polyolefins, in particular polyethylene or polypropylene, polyesters, in particular polyethylene terephthalate, polytrimethylene terephthalate, polybutylene terephthalate or polyetylene- 1,2-furandicaboxylate, polyamides, in particular polyamide 6 or polyamide 6,6, polycarbonates, polyetherketones, polyetheretherketones, polyetherketoneketones polyethers, polyetheresters, polyphenylene sulfides, polyetherimides, copolymers and mixtures thereof.

Fig. 2 shows the layup and the edges of the different layers of honeycomb sheets in a view from/along the W-direction.

To avoid or to reduce the possibility that the interruptions or gaps (caused by cutting and joining) between honeycomb cores 1, 2, 3 in the L-direction are leading to a reduction of shear performance, a reinforcement 15 can be applied to all the weak spots 12, 13 between the pieces of honeycomb cores 1, 2, 3.

In Fig. 3, the reinforcement 15 is shown as provided by a thermoplastic film 16 such as a thermoplastic adhesive film 17 which can be applied with an excess loop 18 between the adjacent edges of the UD-laminated cores 1, 2, 3 to ensure the transfer of shear forces in the cores 1, 2, 3. The thermoplastic film 16 or adhesive film 17 can be applied over the complete length of the UD tapes, i.e. the upper and/or the lower UD-tapes or the complete length between the UD tapes and the honeycomb cores, on the upper side and/or on the lower side.

The reinforcement 15 can be a thermoplastic or thermoset adhesive film (less preferred), or can be a thermoplastic coated metal such as aluminum layer which enables a bonding of the outer UD-tape layers, e.g. by induction heating of the aluminium layer.

Fig. 3 shows how such a reinforcement, e.g. an adhesive film 17, can sag naturally or be pushed between the spaced UD-laminated cores 1, 2, 3 before completing the adhesive process, e.g. by pressure and heat.

Fig. 4 shows the adhesive film loop 18 squeezed between the intermediate panels of honeycomb cores, 1, 2, 3 allowing a lower temperature bonding of the cores 1, 2, 3 to each other and optionally a bonding of the outer UD-tape layers 10, 11 to the intermediate panels.

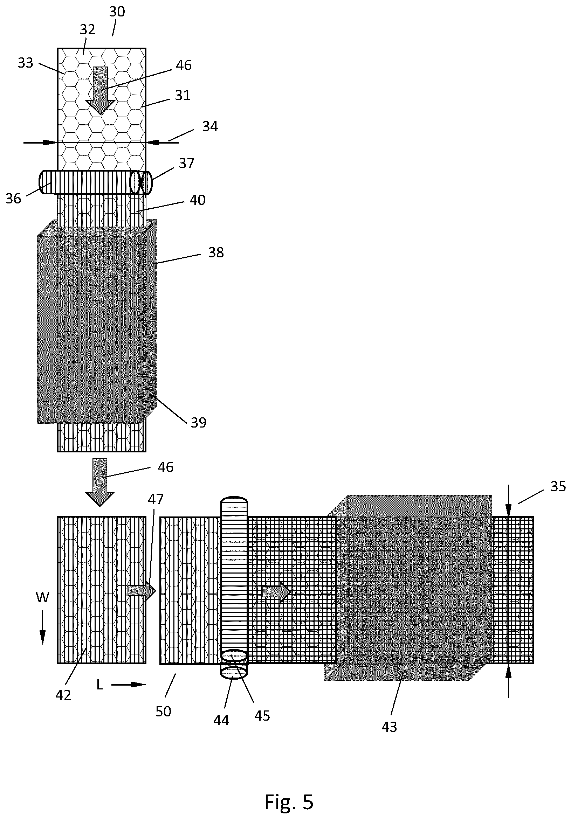

Fig. 5 illustrates a sandwich panel production process 30 and equipment therefor, according to an embodiment of the present invention.

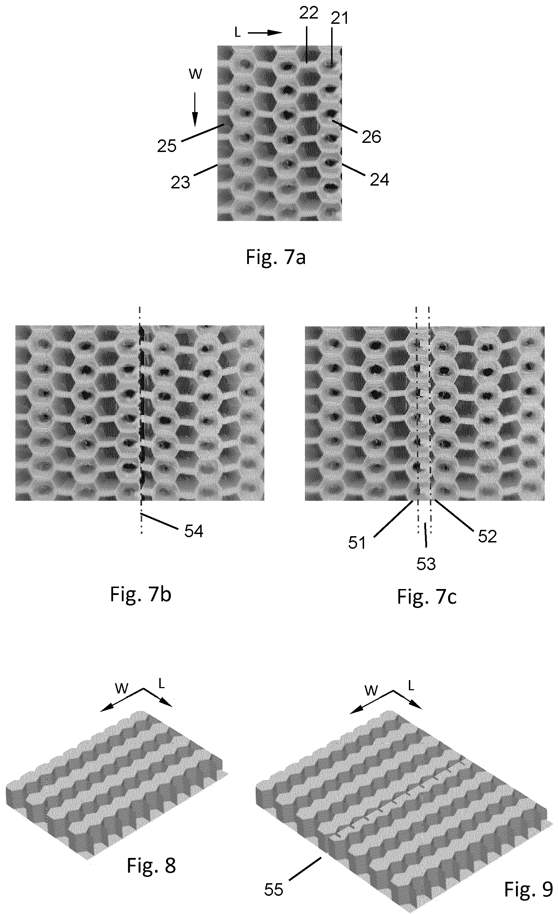

The input 31 material can be a product of an in-line honeycomb core production (shown for example in Fig. 14), preferably a continuous in-line honeycomb core production such as described and shown in WO2006/053407 which is incorporated herein by reference. The input material 31 can be honeycomb cores 32 produced by such a process have an array of honeycomb cells 33, e.g. rectangular, square or hexagonal cells. The array can have columns 21, 22 and rows. Each polygonal cell 33 has lateral cell walls extending between vertices of each polygonal cell 33, each polygonal cell 33 being bounded on two sides by covering-layer planes, the lateral cell walls of each polygonal cell 33 being in the form of a polygonal ring. First columns 21 in Fig. 7a can be of cells closed at the top and second columns 22 can be cells open at the top. First columns 21 alternate with second columns 22 as shown in Fig. 7a. In Fig. 7a one edge 23 of a polygon core can be trimmed to have cells which are open at the top, while the polygonal core can be trimmed on the right edge 24 so that the cells are closed on the top. The honeycomb cores can be trimmed lengthwise during production of the continuously produced honeycomb core to produce suitable, edge structures 23, 24 and edge connections 25, 26 to join two or more panels together using edge connections 25, 26. Alternatively, the trimming can be a method step of processing the honeycomb core 32 in the process 30.

Fig. 7a shows such a first trimmed honeycomb core 32 schematically. On the edge having reference number 23, the cells have been trimmed so that the cells are open at the top and connections 25 are produced. Fig. 7a also shows such a second trimmed honeycomb core, wherein on the edge with reference number 24, the cells have been trimmed so that the cells are open at the top and connections 26 are produced.

Such honeycomb cores 32 will have much larger in-plane dimensions compared to the cell sizes e.g., the cell size can be 3 mm to 10 mm while the width of the honeycomb core 32 can be 400 mm to 1200 mm at a length, of, for example, 2000 mm to 3000 mm.

Figures 7a, b, c show a honeycomb core, e.g. a 12 mm thick honeycomb core with smaller cell size such as 5 mm cell size. Honeycomb cores from different panels are placed together side-by-side. This can lead to a small gap between the honeycomb core sheets, e.g. because the cutting of the edges is sometimes not perfectly straight. In Fig. 7c, the honeycomb core sheets are shown as penetrating each other.

Returning to Fig. 5, the width 34 of the honeycomb core 32 produced by the in-line honeycomb core production 31 will generally be less than the required width 35 of the final product. The final width 35 of the thermoplastic sandwich panel is obtained by cutting the honeycomb core 32 to length and rotation of the machine direction through 90°. To achieve this, the honeycomb core 32 is conveyed towards a laminator 38, especially a calibrator and laminator 39, by a conveyor such as a belt conveyor or caterpillar (not shown). Heating, such as by an infrared lamp or cooling can be provided to bring the honeycomb core 32 to the correct processing temperature before entering the laminator 38 or 39. The processing is continuous. Before reaching the laminator 38 or 39, a 0° UD tape 36 is unwound from a roll and applied to the upper surface of the honeycomb core 32, optionally using temperature and/or pressure. At the same time, a 0° UD tape 37 is unwound from a roll and applied to the under surface of the honeycomb core 32, optionally using temperature and/or pressure. The reinforcing fibers of the OD tapes 36, 37 run in the machine direction, i.e. the machine direction is 0°. In the laminator 39, the lamination of the UD tapes 36, 37 can be completed as well as trimming the edges 23 and 24, e.g. to make the edge connections 25 and 26. The honeycomb cores 32 can be trimmed lengthwise. Alternatively, the trimming can be a method step of processing the honeycomb core 31 in the process 30. The honeycomb cores 31 can be trimmed lengthwise during production of the continuously produced honeycomb core 32 to produce suitable edge structures 23, 24 and edge connections 25, 26. This allows to join two or more panels together using the edge connections 25, 26. Alternatively, the trimming can be a method step of processing the honeycomb core 31 in the process 30. During processing in the laminator and trimmer 39 or before or after processing therein, the intermediate panel 42 with UD tapes on both sides thereof, which is the output of the laminator and trimmer 47, 49, is cut to length. This length is that length which results in a width 35 in the final product.

The intermediate panel 42 is then moved to a separate production line 50 which runs at 90° to the conveyor. By doing so the machine direction has been moved through 90° but the intermediate panel is not rotated.

The intermediate panel 42 includes the honeycomb core 32 with UD tapes 36, 37 now applied in the cross-direction to the new machine direction. A first panel 42 is now joined to a second identical panel 42 by placing the first and second panels side by side and the connections 25, 26 side by side, each in one panel 42, respectively. Connections 25, 26 are brought together to join the first and second panels together in a region of overlap. The intermediate panel 42 is conveyed towards a second laminator 43 by a conveyor such as a belt conveyor or caterpillar (not shown). A 0° UD tape 44 is unwound from a roll and applied to the upper surface of the intermediate panel 42, optionally using temperature and/or pressure. At the same time a 0° UD tape 45 is unwound from a roll and applied to the under surface of the intermediate panel 4,2 optionally using temperature and/or pressure. The reinforcing fibers of the OD tapes 44, 45 run in the machine direction, i.e. the machine direction is 0°. The joined panels are then conveyed to the laminator 43 where the lamination of the UD tapes 44, 45 can be completed. The completed honeycomb sheet with a plurality of intermediate panels 42 with edge connections completed and crossed UD tape reinforcement applied exits the laminator 43 with a width 35 which is larger than the width 34 of the honeycomb core 32, e.g. 50%, or larger.

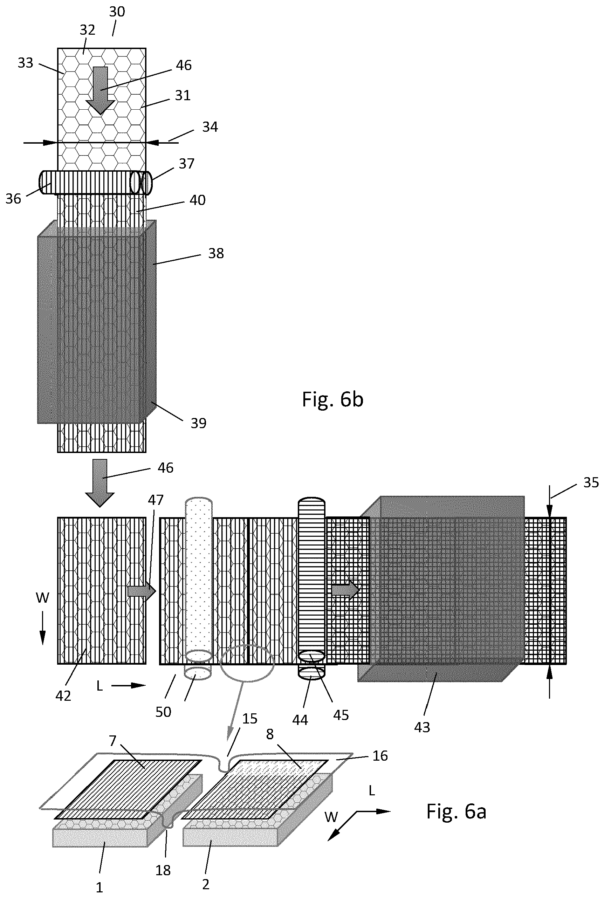

Fig. 6 illustrates another embodiment of a sandwich panel production method and equipment therefor. The method steps and equipment are identical to those described with reference to Fig. 5 except for additional steps mentioned below. Referring to Fig. 6a, the input material can be the same product 32 of an in-line honeycomb core production 31 as described with respect to Figures 1 to 5. The width 34 of the honeycomb core 32 produced by the in-line honeycomb core production 31 will generally be less than the required width 35 of the final product. The device, method and equipment of this embodiment processes the optional additional reinforcement such as bonding layers, e.g. a lower melting thermoplastic adhesive film 16. These bonding layers can also be thermoset adhesive films or thermoplastic adhesive films or thermoplastic coated aluminum layers which could enable a bonding of the outer UD-tape layers by induction heating. In Figures 6a and 6b as in Fig. 3, the reinforcement 15 is shown as provided by a thermoplastic film 16, such as a thermoplastic adhesive film, which can be applied with an excess loop 18 between the adjacent edges of the UD-laminated cores 1, 2, 3 to ensure the transfer of shear forces in the cores 1, 2, 3. The thermoplastic film or adhesive film 16 can be applied over the complete length of the UD tapes, i.e. the upper and/or the lower UD-tapes or the complete length between the UD tapes and the honeycomb cores, on the upper side and/or on the lower side.

The reinforcement 15 can be a thermoplastic or thermoset adhesive film (less preferred, or can be a thermoplastic coated aluminum layer which enables a bonding of the outer UD-tape layers, e.g. by induction heating of the aluminium layer.

Fig. 6a shows how such a reinforcement, e.g. an adhesive film 17, can sag naturally or be pushed between the still somewhat spaced UD-laminated cores 1, 2, 3 before completing the adhesive process, e.g. by pressure and heat.

Fig. 6a shows the adhesive film loop 18 squeezed between the intermediate panels of honeycomb cores, 1, 2, 3 allowing a lower temperature bonding of the cores 1, 2, 3 to each other and, optionally, a bonding of the outer UD-tape layers 10, 11 to the intermediate panels 42.

An advantage compared to sandwich panels laminated with woven thermoplastic composites skins or composite skins which have been laminated from 0°/90° UD-tape layers is that with embodiments of the present invention the thermoplastic welding or lamination of the inner UD-tapes can be done in a fast and simple continuous process, in-line with the continuous production of the honeycomb core. This results in intermediate panels with single ply UD-tape reinforced skins.

The width of the final sandwich panel can be achieved by a 90° rotation of the machine direction for the processing intermediate panels. The final width can be obtained by cutting to length the honeycomb core with UD reinforcing tapes. These tapes are applied to obtain an intermediate panel with the single ply UD-reinforced skins. This reduces waste and leads to a cost advantage.

The final panel width is only limited by the width of a second laminator or thermoplastic welder. This allows to produce 2 m to 3 m wide panels with a honeycomb core production as an input, of only 400 mm to 1200 mm wide for example.

A faster inline production speed of the honeycomb core is possible because the calibration and lamination of first skin layer requires less heat flux. Less heat has to pass through thinner skin material (single ply) in order to reach to core for the core-skin bonding process by thermoplastic welding.

The flexible usage of variable tape width and an easy width modification is possible by placing several rolls of smaller width UD-tape next to each other in one or both first and second lamination steps. This leads to cost advantages and makes the sourcing of UD tapes easier. Furthermore, the dependency on the availability of a large width cross-ply production line is reduced.

The intermediate unwinding and upwinding steps of UD tape during cross-ply production are not necessary. Compared to the separate handling of pre-cut 90° UD tape sheets in the production of a cross-ply skin laminate, the handling of the single ply UD-reinforced intermediate panels is much easier. Furthermore, the proposed process enables an improved surface quality of the final panel due to lower lamination temperature of a second skin layer.

The potential disadvantage when joining core sheets to produce a large size sandwich panel is that the interruption of the core reduces the shear performance and the skin support of the core, which could significantly reduce the mechanical properties of the final large size sandwich panel. The present invention avoids this reduction of the mechanical properties by at least one means and preferably more than one means providing a reinforcement in or across gaps between honeycomb core panels in the joint area. This reinforcement can be achieved by interlocking and/or overlapping the core layers and/or interpenetration of the core edges. This can also be achieved by an in-line edge trimming of both edges of the intermediate single ply UD-reinforced honeycomb core panel, in-line with the production of the optionally continuously produced honeycomb core. This trimming and preparation of the edges results in a reinforcement including improved edges of the panels to enable a better side by side joining of the panels with an overlap of the core sheets at the joint.

For high temperature thermoplastics, the welding of thermoplastic composite skin layers has to be performed at a temperature >300°C which does not allow to use lower cost PTFE belt laminators. The sandwich panel production according to embodiments of the present invention allows to laminate or weld the honeycomb core to the inner 0°-UD-tapes (e.g. from high temperature thermoplastics, like PEI/CF or PEEK/CF) in small width in-line with the high temperature thermoplastic honeycomb production via a small width steel belt laminator. Then the second outer layers of 0°-UD-tapes (after the machine direction of the honeycomb core with the first inner UD layers are rotated by 90°) are applied with a lower melting thermoplastic adhesive via a large width PTFE belt laminator.

For cost efficient sandwich panels composed of polypropylene (PP), it is of interest to laminate the UD tape in the outer layers in the second step at lower temperatures because the surface quality is improved at lower lamination temperatures. A decorative surface layer can be laminated together with the second UD-tape layers in the second lamination step at lower temperatures, which enables to maintain a high-quality surface finish, even if the decorative layer is made from the same polymer, which is desirable to enable the recycling of the full sandwich panel.

For large size sandwich panels e.g., for side walls of truck trailers or for truck boxes it is advantageous to produce the final large width panel in a cost-efficient process locally just in time to reduce transportation costs and storage costs of the sandwich panels.

Honeycomb core sheets according to embodiments of the present invention have an array of polygonal cells such as hexagonal, rectangular or square cells, the array having rows and columns. Each polygonal cell has lateral cell walls extending between vertices of each polygonal cell, each polygonal cell being bounded on two sides by covering-layer planes, the lateral cell walls of each polygonal cell being in the form of a polygonal ring. First columns 21 in Fig. 7a can be of cells closed at the top and second columns 22 can be cells open at the top. First columns 21 alternate with second columns 22 as shown in Fig. 7a. In Fig. 7a one edge 23 of the core sheets can have cells which are open at the top, while the core sheets are trimmed on the right edge 24 so that the cells are closed on top. The honeycomb core sheets can be trimmed lengthwise during production of the continuously produced honeycomb core to produce suitable edge structures to join two or more panels together using edge connections made with trimmed honeycomb cores with first and second edge connections 25 and 26.

Fig. 7a shows such a trimmed honeycomb core sheet schematically. On the edge 23 the cells have been trimmed so that the cells are open at the top and connections 25 are produced.

Typically, such core sheets will have much larger in-plane dimensions compared to the cell sizes e.g., the cell size can be 3 mm to 10 mm while the width of the core sheet can be 400 mm to 1200 mm with a length of, for example, 2000 mm to 3000 mm.

Figures 7b and 7c show joining of two honeycomb cores in accordance with embodiments of the present invention. Fig. 7b shows two honeycomb core sheets with trimmed edges, side by side. In Fig. 7c, two honeycomb core sheets are shown with an overlap, so that the L-cell walls of the left edge of one core sheet are between the W-cell walls and in the honeycomb cells on the right side of the neighboring core sheet. This results in some interpenetration at the joint position which results in an area of higher core density, i.e. in an overlap region of the two neighboring honeycomb sheets.

Fig 8 shows on the left side a 3D image of a honeycomb core sheet with the left and right edge trimmed according to the present invention.

Fig. 9 shows two neighboring core sheets which overlap to create an area of larger core density.

Fig. 10 shows a side view of two honeycomb cores with the left and right edges of the adjacent panels trimmed according to the present invention to provide edge connections. This creates the possibility for the two honeycomb cores to be pushed together to form an overlap. Each honeycomb core 32 is preferably formed from a plurality of polygonal cells arranged in an array, wherein each polygonal cell has lateral cell walls (shown as vertical lines), each polygonal cell being bounded on two sides by covering-layer planes, the lateral cell walls of each polygonal cell forming a polygonal ring. Such a core and its manufacture are shown for example in FIG. 14.

Fig. 11 shows a side view of two neighboring cores 32 as shown in Fig. 1 (as, 1, 2, 3) which have been joined together by means of an overlap created by the trimming step to create a limited area of larger core density at the join and, therefore, provides some reinforcement.

Fig. 12 shows a side view of two intermediate panels with the 0° UD-tapes 36, 37 on the honeycomb cores 32. The UD tape layers 36, 37 are laminated onto the honeycomb core 32 whereby the top layer 36 on the left-hand side and the bottom layer 37 on the right hand side of Fig.12 are formed with a small offset e.g., equal to one cell wall width a = c/√3 or half the cell size c. This provides a further reinforcement at the joint between two panels.

Fig. 13 shows how those neighboring intermediate panels are placed together. The outer UD-tape layers 44, 45 are continuous over the connection of the intermediate panels. Underneath these layers are the layers 36, 37. This provides a further reinforcement at the joint between two panels.

Referring to Fig. 14, an example of honeycomb core manufacture is described such as folded honeycomb cores which can be used with any of the embodiments of the present invention. An advantage of this honeycomb is that it can be manufactured continuously. Some ends of the cells are open. Fig.14 shows the use of a flat sheet or web which is made of a plastically deformable material. The plastically deformable material may be a thermoplastic polymeric material, or a fiber composite material, or similar, wherein the sheet is composed of a thermoplastic polymer and/or a thermoplastic elastomeric polymer, or a thermoplastic polymer selected from a group consisting of polyolefins, in particular polyethylene or polypropylene, polyesters, in particular polyethylene terephthalate, polytrimethylene terephthalate, polybutylene terephthalate or polyetylene- 1,2-furandicaboxylate, polyamides, in particular polyamide 6 or polyamide 6,6, polycarbonates, polyetherketones, polyetheretherketones, polyetherketoneketones polyethers, polyetheresters, polyphenylene sulfides, polyetherimides, copolymers and mixtures thereof.

In accordance with this embodiment the flat web or sheet has plastic deformations 101, 102 formed therein mainly perpendicular to the material web. In the regions 101 and 102, the material is deformed, e.g. polygonally, for example trapezoidally, or sinusoidally, or arcuately or the like, from the plane of the web. The deformations form ridges 108 and valleys 109 whereby each of these is not continuous. For example, the ridges are composed of a linear series of deformed sections 101, 102, e.g. polygonal, for example trapezoidal, or sinusoidal, or arcuate sections or the like. Preferably, the ridges have a top surface that may be initially (e.g. as formed) parallel to the plane of the web of material. Two such surfaces will abut each other when the 3D structures are rotated (also called "folded") to form the honeycomb cells. The production direction is preferably as shown in Fig. 14 however a direction perpendicular thereto (parallel to the axes 105 and 106) could be used as well.

The regions 101 and 102 are preferably formed inclined, i.e. rotated towards each other around the axis 105 and/or 106, to form additionally u- or v-shaped connection areas 103 and 104. The connecting areas 103 and 104 separate the ridge sections 101,102, e.g. the polygonal, for example trapezoidal, or sinusoidal, or arcuate sections or the like in one row of regions 101, 102. One connecting area103, 104 is placed between two ridge sections 101, 102 and connecting areas 103 alternate along the row of regions 101, 102 with connecting areas 104. The connecting areas 103, 104 form cross-valleys, i.e. perpendicular to the valleys 109. Adjacent cross-valleys are on opposite sides of the web material. The rotation of the ridge sections 101, 102 to bring them into the initial position of Fig. 14 is preferably performed at the same time as the deformations are placed into the web of material. The web material is stretched at the transitions between the ridge sections 101 and 102 to form the connecting areas 103 and 104, which are substantially perpendicular to the outer surfaces of the ridge sections 101 and 102. The angle between connecting areas 103, 104 on different ridge sections, allows a part of a tool to enter and, thus, to form these sections. In the direction of its width, the material web can change its dimensions in the direction of the axis 105 and the axis 106, while in the production direction, the length of the material web does not change in dimension.

The deformation of the web or sheet material in the regions 101 and 102 serves the purpose of the formation of three-dimensional shapes, which form the walls of cell halves in the folded end product. The cells thus formed are structural and load bearing elements of the folded honeycomb core, the walls of which extend transversely to the longitudinal direction of the folded end product. The cells formed by folding are preferably cylindrical in cross section, the axis of the cylinder extending transversely with respect to the longitudinal direction of the folded end product and in thickness direction of the planar honeycomb core finally produced. The basic cross-sectional shape of a cell can be selected as desired, for example circular or polygonal, in particular even-numbered polygonal, for example hexagonal. The final cell shape is determined by the shape of the deformed ridge sections 101, 102 in the original web and how they fold together. As shown schematically on the right-hand side in Fig. 14 when the web is fully folded, each cell is formed from two half-cells. The cells are arranged in rows. Each final cell is formed by the bottom and sides of two longitudinally adjacent (in the sheet or web material) valley sections 109. The half cells are joined preferably together across touching surfaces from two longitudinally adjacent (in the web material) ridge sections 108. Accordingly, a folded honeycomb is provided, formed from a plurality of cells arranged in rows, with the following features: the cells have lateral cell walls which adjoin one another in the form of a ring and are bounded towards two opening sides of the cell by covering-layer planes whereby the cells are each bridged or closed completely in one or other of the covering-layer planes. The folded honeycomb can be formed from a substantially uncut flat web, i.e. a continuous sheet that is not porous. The sheet can be extruded. Plastic deformation of the sheet forms 3D structures. Hence, the folded honeycomb contains a plurality of 3D-structures, e.g. polygonally, sinusoidally or arcuately shaped regions (101 and 102) formed by plastic deformation and connecting areas (103 and 104) in the covering-layer planes produced by the plastic deformation. At least part of adjacent cell walls are preferably wholly or partly permanently connected to one another, e.g. by glue or adhesive or welding. After the manufacturing processing described above, the honeycomb core 32 is conveyed towards a laminator 38 especially a calibrator and laminator 39 by a conveyor such as a belt conveyor or caterpillar (not shown). - see Fig. 5 and Fig. 6. A 0° UD tape 36 is unwound from a roll and applied to the upper surface of the honeycomb core 32, optionally using temperature and/or pressure.

The present invention includes the final folded product being a mixture of cells of different sizes or shapes.

An important improvement of the honeycomb core for the performance of the sandwich panel is the support of the skins by the honeycomb core. A small area with higher core density at the joint of the intermediate panels comprising honeycomb cores can ensure that the final large size sandwich panel has no weak spot at the connection between panels.

The panel's edges can be cut with a slope, but with trim knifes for standard edges it is easier to have the panels cut straight with the core and the skins cut at the same position in width.

The small offset where no 0° UD-tape layers are on the honeycomb core is preferably created by an offset in the lamination process. Alternatively, a small strip of the UD-tape is removed after the UD-tapes have been laminated and the complete panel edges have been trimmed.

An aim is to ensure that there is a bit more skin material and especially a bit more core material to make the support for the outer 0° UD-tape layers better and results thus in better mechanical properties at the panel connection.

Contrary to overlapping honeycomb core material at junctions between intermediate panels creating an overlap of the UD tapes when pushing the panels together, because the UD-tapes do not have much in-plane tension strength in the direction transverse to the UD fiber orientation, in 90° direction to the panel connection. However, to avoid positioning of the UD-tapes and the additional trimming of the UD-tapes to create the offset, it is also an option to push the UD-tape layers together and create an overlap.

One edge of the honeycomb core sheets is cut at the end of the L-cell walls, while the other edge of the honeycomb core sheets is cut at the beginning of the L-cell walls.

At the location where edges of the two honeycomb core sheets penetrate into each other, e.g. for a few millimeters, the density of the honeycomb core is higher e.g. twice as high compared with any position in the honeycomb core. The amount of penetration can be, for example, up to one cell wall length (a = cell size / √3) without a distortion of the cells, which leads to a substantial improvement of the core compression resistance and the core shear resistance and, thus, to an increase of the local bending strength of the panel. Besides the production advantages of the present invention, having the joint of the first 0° UD layers at the location where the honeycomb core sheets penetrate each other leads to a substantial improvement of the support for the outer 90° UD layers at this critical location.

## Claims

1. A reinforced honeycomb sandwich panel comprising: a plurality of honeycomb core sheets having edges, and having a first core density,
first skin layers with 0° fiber reinforcement laminated on both sides of each of the plurality of honeycomb core sheets, to form laminated reinforced honeycomb core sheets,
a butt joint between edges of respective laminated reinforced honeycomb core sheets in a side-by-side location of the edges of the laminated reinforced honeycomb core sheets so that the edges overlap each other or interpenetrate each other or are deformed to create an area of a second core density higher than the first core density at the conjunction of the laminated reinforced honeycomb cores and of the first skin layers with 0° fiber reinforcement layer above and below a position where the edges of the honeycomb cores join,
second skin layers with 90° fiber reinforcement layer on both sides of the laminated reinforced honeycomb cores on the 0° fiber reinforced layers, to form a laminated reinforced honeycomb sandwich panel.

2. The panel according to claim 1, wherein the honeycomb core sheets have polygonal cells in an array, the polygonal cells having cell walls with a cell wall length between vertices of a polygon, and interpenetration of edge connections of the honeycomb core sheets is up to one cell wall length.

3. The panel according to claim 1 or 2, further comprising a joint with the first 0° fiber reinforcement layers at a location where adjacent honeycomb core sheets interpenetrate each other.

4. The panel according to claim 2 or 3, wherein for half of the polygonal cells along one edge, the top or bottom of the cell is open and along an opposing edge, for another half of the cells, the top or bottom is closed, or, wherein on an edge of the laminated reinforced honeycomb core sheets, the cells from one reinforced honeycomb core sheet have open tops and are cut in half, and joined with cells from an adjacent reinforced honeycomb core sheet, the cells having closed tops that are cut in half.

5. The panel according to any of the previous claims, wherein the honeycomb core is a folded honeycomb core.

6. The panel according to any of the previous claims, wherein the honeycomb core is made from a sheet which is composed of a thermoplastic polymer and/or a thermoplastic elastomeric polymer

7. The panel according to any of the previous claims, wherein a further reinforcement is applied to the joints between the honeycomb cores, wherein
the further reinforcement is provided by a thermoplastic film or a thermoplastic adhesive film which has an excess loop between adjacent edges of the honeycomb cores, or
wherein the further reinforcement is a means to ensure the transfer of shear forces in the honeycomb cores, or
wherein the further reinforcement is a thermoplastic film or a thermoset adhesive film or a thermoplastic coated aluminum layer which allows induction heating of the aluminium layer, or
wherein the further reinforcement sags between the honeycomb cores before completing an adhesive process, optionally by pressure and heat.

8. Equipment for continuous production of a laminated reinforced honeycomb sandwich panel from a plurality of honeycomb cores as input material, each of the honeycomb cores having two opposed major surfaces, one on each side of each of the honeycomb cores, the equipment comprising:
a first conveyor to convey the input material to a laminator in a first machine direction,
a store for storing first skin layers which are a first 0° fiber reinforcement layer,
a laminator for laminating by thermoplastic welding, the first skin layers, one first skin layer being laminated on each major surface of each of the honeycomb cores to form a layered honeycomb core, the first 0° fiber reinforcement layer having fibers that extend in a first machine direction,
a cutter for cutting the layered honeycomb cores to form first and second intermediate panels having edges continuous and straight,
a trimmer for trimming opposed edges of the first and second intermediate panels to expose edge connections,
a second conveyor having a second machine direction at 90° to the first machine direction, for receiving the layered honeycomb cores without rotating the layered honeycomb cores,
means for joining a first layered honeycomb core to a second layered honeycomb core in continuous production to form a joint of the first and second honeycomb cores with a reinforcement at the joint of the first and second layered honeycomb cores, the reinforcement at the joint comprising one or more of : overlapping or interpenetration of edges of adjacent intermediate panels or use of adhesive layers or loops of adhesive for gluing the first intermediate panel to the second intermediate panel at a butt joint, with optional application of an in-line compression force to on the edge connections of the first and second intermediate panels or completing an adhesive butt joint,
a second store for storing second skin layers having a second 0° fiber reinforcement layer with reference to the second machine direction, the application being onto each side of each of the layered honeycomb cores, and
a second laminator for laminating by thermoplastic welding, the second skin layers, one second skin layer being laminated on each major surface of each of the layered honeycomb cores to form a layered honeycomb core, the second 0° fiber reinforcement layer having fibers that extend in the second machine direction.

9. A method for continuous production of a laminated reinforced honeycomb sandwich panel from a plurality of honeycomb cores as input material, each of the honeycomb cores having two opposed major surfaces, one on each side of each of the honeycomb cores, the method comprising:
applying and laminating, by thermoplastic welding, first skin layers having a first 0° fiber reinforcement layer, one first skin layer being laminated on each major surface of each of the honeycomb cores to form a layered honeycomb core, the first 0° fiber reinforcement layer having fibers that extend in a first machine direction,
cutting the layered honeycomb cores to form first and second intermediate panels having edges continuous and straight,
trimming opposed edges of the first and second intermediate panels to expose edge connections,
rotating the first machine direction through 90° resulting in a second machine direction, without rotating the intermediate panels,
joining a first intermediate panel to a second intermediate panel in continuous production to form a joint of the first and second intermediate panels with a reinforcement at the joint of the first and second intermediate panels, the reinforcement comprising one or more of:
overlapping or interpenetration of edges of adjacent intermediate panels or use of adhesive layers or loops of adhesive for gluing the first intermediate panel to the second intermediate panel at a butt joint, with optional application of an in-line compression force to on the edge connections of the first and second intermediate panels or completing an adhesive butt joint, and
applying and laminating by thermoplastic welding, second skin layers with a second 0° fiber reinforcement to the joined first and second intermediate panels, one second skin layer being laminated on each major surface of the first and second intermediate panels to form a laminated reinforced honeycomb core wherein the fiber direction of the second skin layers is 90° to the fiber direction of the first skin layers on each laminated reinforced honeycomb core.

10. The method according to claim 9, wherein the trimming of the opposed edges to expose edge connections is carried out before the cutting step, after the cutting step, at the same time as the cutting step.

11. The method according to claim 9 or 10, wherein the honeycomb cores have polygonal cells in an array, the polygonal cells having cell walls with a cell wall length between vertices of a polygon, and interpenetration of edge connections of first and second intermediate panels is up to one cell wall length.

12. The method according to any of the preceding claims, further comprising joining the first 0° fiber reinforcement layers at a location where adjacent intermediate panels interpenetrate each other.

13. The method according to any of the preceding claims, wherein the honeycomb core is a folded honeycomb core.

14. The method according to any of the preceding claims wherein a further reinforcement is applied to the joints between the honeycomb cores.

15. The method according to claim 14, wherein the further reinforcement is provided by a thermoplastic film or a thermoplastic adhesive film which is applied with an excess loop between adjacent edges of laminated honeycomb cores, or
wherein the further reinforcement is a means to ensure the transfer of shear forces in the honeycomb cores, or
wherein the further reinforcement is a thermoplastic film or a thermoset adhesive film or a thermoplastic coated aluminum layer which allows induction heating of the aluminium layer, or
wherein the further reinforcement sags between the honeycomb cores before completing an adhesive process, optionally by pressure and heat.

## Patentansprüche

1. Eine verstärkte Wabensandwichplatte, bestehend aus: Einer Vielzahl von Wabenkernplatten mit Kanten und einer ersten Kerndichte,
ersten Hautschichten mit 0°-Faserverstärkung, die auf beiden Seiten jeder der Vielzahl von Wabenkernplatten laminiert sind, um laminierte verstärkte Wabenkernplatten zu bilden, einer Stoßverbindung zwischen den Kanten der jeweiligen laminierten verstärkten Wabenkernplatten in einer nebeneinander liegenden Anordnung der Kanten der laminierten verstärkten Wabenkernplatten, so dass sich die Kanten überlappen, sich gegenseitig durchdringen oder verformt werden, um einen Bereich mit einer zweiten Kerndichte zu erzeugen, die höher als die erste Kerndichte an der Verbindungsstelle der laminierten verstärkten Wabenkerne und der ersten Hautschichten ist, mit einer 0°-Faserverstärkungsschicht über und unter einer Position, an der die Kanten der Wabenkerne zusammentreffen,
zweiten Hautschichten mit einer 90° Faserverstärkungsschicht auf beiden Seiten der laminierten verstärkten Wabenkerne über den 0°-Faserverstärkungsschichten, um eine laminierte verstärkte Wabensandwichplatte zu bilden.

2. Die Platte gemäß Anspruch 1, worin die Wabenkernplatten polygonale Zellen in einer Anordnung aufweisen, wobei die polygonalen Zellen Zellwände mit einer Zellwandlänge zwischen den Scheitelpunkte eines Polygons aufweisen, und worin gegenseitige Durchdringung von Kantenverbindungen der Wabenkernplatten bis zu einer Zellwandlänge beträgt.

3. Die Platte gemäß Anspruch 1 oder 2, ferner umfassend eine Fuge mit den ersten 0° Faserverstärkungsschichten an einer Stelle, an der benachbarte Wabenkernplatten sich gegenseitig durchdringen.

4. Die Platte gemäß den Ansprüchen 2 oder 3, worin bei der Hälfte der polygonalen Zellen entlang einer Kante die Oberseite oder Unterseite der Zelle offen und entlang einer gegenüberliegenden Kante bei der anderen Hälfte der Zellen die Ober- oder Unterseite geschlossen ist, oder worin an einer Kante der laminierten verstärkten Wabenkernplatten, die Zellen aus einer verstärkten Wabenkernplatte offene Spitzen haben und halb durchgeschnitten sind und mit den Zellen aus einer benachbarten verstärkten Wabenkernplatte verbunden sind, in der die Zellen geschlossene Spitzen haben und halb durchgeschnitten sind.

5. Die Platte gemäß einem der vorhergehenden Ansprüche, worin der Wabenkern ein gefalteter Wabenkern ist.

6. Die Platte gemäß einem der vorhergehenden Ansprüche, worin der Wabenkern aus einer Platte hergestellt wird, die aus einem thermoplastischen Polymer und/oder einem thermoplastischen Elastomerpolymer besteht

7. Die Platte gemäß einem der vorhergehenden Ansprüche, worin eine weitere Verstärkung auf die Verbindungen zwischen den Wabenkernen aufgebracht wird, worin
die weitere Verstärkung durch eine thermoplastische Folie oder eine thermoplastische Klebefolie bereitgestellt wird, die eine überschüssige Schlaufe zwischen benachbarten Kanten der Wabenkerne aufweist, oder
worin die weitere Verstärkung ein Mittel ist, um die Übertragung von Scherkräften in den Wabenkernen zu gewährleisten, oder
worin die weitere Verstärkung eine thermoplastische Folie oder eine duroplastische Klebefolie oder eine thermoplastisch beschichtete Aluminiumschicht ist, die eine induktive Erwärmung der Aluminiumschicht ermöglicht, oder worin die weitere Verstärkung zwischen den Wabenkernen durchhängt, bevor ein Klebeprozess, gegebenenfalls durch Druck und Hitze, durchgeführt wird.

8. Ausrüstung zur kontinuierlichen Herstellung einer laminierten verstärkten Wabensandwichplatte aus einer Vielzahl von Wabenkernen als Ausgangsmaterial, wobei jeder der Wabenkerne zwei gegenüberliegende Hauptflächen mit einer Fläche auf jeder Seite jedes Wabenkerns aufweist, wobei die Ausrüstung Folgendes umfasst:
ein erstes Förderband, um das Ausgangsmaterial in einer ersten Maschinenrichtung zu einem Laminiergerät zu befördern, ein Lager zur Lagerung der ersten Hautschichten, die eine erste 0°-Faserverstärkungsschicht darstellen,
ein Laminiergerät zum Laminieren der ersten Hautschichten durch thermoplastisches Schweißen, wobei eine erste Hautschicht auf jede Hauptoberfläche jedes der Wabenkerne aufgebracht wird, um einen geschichteten Wabenkern zu bilden, wobei die erste 0°-Faserverstärkungsschicht Fasern aufweist, die sich in eine erste Maschinenrichtung erstrecken, ein Schneidwerkzeug zum Schneiden der geschichteten Wabenkerne, um erste und zweite Zwischenplatten mit durchgehenden und geraden Kanten zu bilden,
einen Trimmer zum Trimmen der gegenüberliegender Kanten der ersten und zweiten Zwischenplatten, um die Kantenverbindungen freizulegen,
ein zweites Förderband mit einer zweiten Maschinenrichtung in einem Winkel von 90° zur ersten Maschinenrichtung zur Aufnahme der geschichteten Wabenkerne ohne die geschichteten Wabenkerne zu drehen, Mittel zur Verbindung eines ersten geschichteten Wabenkerns mit einem zweiten geschichteten Wabenkern in kontinuierlicher Produktion, um eine Verbindung des ersten und zweiten Wabenkerns mit einer Verstärkung an der Verbindungsstelle des ersten und zweiten Wabenkerns zu bilden, wobei die Verstärkung an der Verbindung eine oder mehrere der folgenden Elemente umfasst: Überlappung oder gegenseitige Durchdringung der Kanten von benachbarten Zwischenplatten oder Verwendung von Klebeschichten oder Klebstoffschlaufen zum Verkleben der ersten Zwischenplatte mit der zweiten Zwischenplatte an einer Stoßverbindung, mit optionaler Anwendung einer Inline-Druckkraft auf die Kantenverbindungen der ersten und zweiten Zwischenplatte oder Ausführung einer klebenden Stoßverbindung,
ein zweites Lager für die Lagerung von zweiten Hautschichten mit einer zweiten 0°-Faserverstärkungsschicht in Bezug auf die zweite Maschinenrichtung, wobei die Aufbringung auf jeder Seite, jeder der geschichteten Wabenkerne erfolgt, und
ein zweites Laminiergerät zum Laminieren der zweiten Hautschichten durch thermoplastisches Schweißen, wobei eine zweite Hautschicht auf jeder Hauptoberfläche jedes der geschichteten Wabenkerne aufgebracht wird, um einen geschichteten Wabenkern zu bilden, wobei die zweite 0°-Faserverstärkungsschicht Fasern aufweist, die sich entlang der zweiten Maschinenrichtung erstrecken.

9. Ein Verfahren zur kontinuierlichen Herstellung einer laminierten verstärkten Wabensandwichplatte aus einer Vielzahl von Wabenkernen als Ausgangsmaterial, wobei jeder der Wabenkerne zwei gegenüberliegende Hauptflächen mit einer Fläche auf jeder Seite jedes Wabenkerns aufweist, worin das Verfahren Folgendes umfasst:
Aufbringen und Laminieren von ersten Hautschichten mit einer ersten 0°-Faserverstärkungsschicht durch thermoplastisches Schweißen, wobei eine erste Hautschicht auf jede Hauptoberfläche jedes Wabenkerns aufgebracht wird, um einen geschichteten Wabenkern zu bilden, worin die erste 0°-Faserverstärkungsschicht Fasern aufweist, die sich in eine erste Maschinenrichtung erstrecken, Schneiden der geschichteten Wabenkerne , um erste und zweite Zwischenplatten mit durchgehenden und geraden Kanten zu bilden,
Trimmen der gegenüberliegenden Kanten der ersten und zweiten Zwischenplatten, um die Kantenverbindungen freizulegen,
Drehen der ersten Maschinenrichtung um 90°, ohne die Zwischenplatten zu drehen, wodurch eine zweite Maschinenrichtung entsteht,
Verbinden einer ersten Zwischenplatte mit einer zweiten Zwischenplatte in kontinuierlicher Produktion, um eine Verbindung der ersten und zweiten Zwischenplatten mit einer Verstärkung an der Verbindungsstelle der ersten und zweiten Zwischenplatte zu bilden, wobei die Verstärkung eines oder mehrere der folgenden Elemente umfasst:
Überlappung oder gegenseitige Durchdringung der Kanten von benachbarten Zwischenplatten oder Verwendung von Klebeschichten oder Klebstoffschlaufen zum Verkleben der ersten Zwischenplatte mit der zweiten Zwischenplatte an einer Stoßverbindung, mit optionaler Anwendung einer Inline-Druckkraft auf die Kantenverbindungen der ersten und zweiten Zwischenplatten oder Ausführung einer klebenden Stoßverbindung, und
Aufbringen und Laminieren von zweiten Hautschichten mit einer zweiten 0°-Faserverstärkung durch thermoplastisches Schweißen auf die verbundenen ersten und zweiten Zwischenplatten, wobei eine zweite Hautschicht auf jede Hauptoberfläche der ersten und zweiten Zwischenplatten aufgebracht wird, um einen laminierten verstärkten Wabenkern zu bilden, worin die Faserrichtung der zweiten Hautschichten 90° im Verhältnis zur Faserrichtung der ersten Hautschichten auf jedem laminierten verstärkten Wabenkern beträgt.

10. Das Verfahren gemäß Anspruch 9, worin das Trimmen der gegenüberliegenden Kanten zum Freilegen der Kantenverbindungen, vor dem Schneidschritt, nach dem Schneidschritt oder gleichzeitig mit dem Schneidschritt durchgeführt wird.

11. Das Verfahren gemäß Anspruch 9 oder 10, worin die Wabenkerne polygonale Zellen in einer Anordnung aufweisen, wobei die polygonalen Zellen Zellwände mit einer Zellwandlänge zwischen den Scheitelpunkten eines Polygons aufweisen, und Durchdringung von Kantenverbindungen der ersten und zweiten Zwischenplatten bis zu einer Zellwandlänge beträgt.

12. Das Verfahren gemäß einem der vorangehenden Ansprüche, das ferner das Verbinden der ersten 0°-Faserverstärkungsschichten an einer Stelle,umfasst, an der sich benachbarte Zwischenplatten gegenseitig durchdringen.

13. Das Verfahren gemäß einem der vorangehenden Ansprüche, worin der Wabenkern ein gefalteter Wabenkern ist.

14. Das Verfahren gemäß einem der vorhergehenden Ansprüche, worin eine weitere Verstärkung auf die Verbindungen zwischen den Wabenkernen aufgebracht wird.

15. Das Verfahren gemäß Anspruch 14, worin die weitere Verstärkung durch eine thermoplastische Folie oder eine thermoplastische Klebefolie bereitgestellt wird, die mit einer überschüssigen Schlaufe zwischen den benachbarten Kanten der laminierten Wabenkerne aufgebracht wird, oder
worin die weitere Verstärkung ein Mittel ist, um die Übertragung von Scherkräften in den Wabenkernen zu gewährleisten, oder
worin die weitere Verstärkung eine thermoplastische Folie oder eine duroplastische Klebefolie oder eine thermoplastisch beschichtete Aluminiumschicht ist, die eine induktive Erwärmung der Aluminiumschicht ermöglicht, oder worin die weitere Verstärkung zwischen den Wabenkernen durchhängt, bevor ein Klebeprozess, gegebenenfalls durch Druck und Hitze, durchgeführt wird.

## Revendications

1. Panneau sandwich en nid d'abeille renforcé comprenant : une pluralité de feuilles d'âme en nid d'abeille ayant des bords, et ayant une première densité d'âme,
des premières couches de peau avec un renforcement en fibres à 0° stratifiées sur les deux côtés de chacune de la pluralité de feuilles d'âme en nid d'abeille, pour former des feuilles d'âme en nid d'abeille renforcées stratifiées,
un joint bout à bout entre des bords de feuilles d'âme en nid d'abeille renforcées stratifiées respectives dans un emplacement côte à côte des bords des feuilles d'âme en nid d'abeille renforcées stratifiées de sorte que les bords se chevauchent ou s'interpénètrent l'une l'autre ou sont déformés pour créer une zone d'une seconde densité d'âme plus élevée que la première densité d'âme au niveau de la jonction des âmes en nid d'abeille renforcées stratifiées et des premières couches de peau avec une couche de renforcement en fibres à 0° au-dessus et en dessous d'une position où les bords des âmes en nid d'abeille se rejoignent,
des secondes couches de peau avec une couche de renforcement en fibres à 90° des deux côtés des âmes en nid d'abeille renforcées stratifiées sur les couches renforcées en fibres à 0°, pour former un panneau sandwich en nid d'abeille renforcé stratifié.

2. Panneau selon la revendication 1, dans lequel les feuilles d'âme en nid d'abeille ont des cellules polygonales en un réseau, les cellules polygonales ayant des parois de cellule avec une longueur de paroi de cellule entre des sommets d'un polygone, et de l'interpénétration de liaisons de bord des feuilles d'âme en nid d'abeille est jusqu'à une longueur de paroi de cellule.

3. Panneau selon la revendication 1 ou 2, comprenant en outre un joint avec les premières couches de renforcement en fibres à 0° à un emplacement où des feuilles d'âme en nid d'abeille adjacentes s'interpénètrent.

4. Panneau selon la revendication 2 ou 3, dans lequel pour la moitié des cellules polygonales le long d'un bord, le haut ou le bas de la cellule est ouvert et le long d'un bord opposé, pour l'autre moitié des cellules, le haut ou le bas est fermé, ou, dans lequel sur un bord des feuilles d'âme en nid d'abeille renforcées stratifiées, les cellules d'une feuille d'âme en nid d'abeille renforcée ont des sommets ouverts et sont coupées en deux, et sont j ointes avec des cellules d'une feuille d'âme en nid d'abeille renforcée adjacente, les cellules ayant des sommets fermés qui sont coupés en deux.

5. Panneau selon l'une quelconque des revendications précédentes, dans lequel l'âme en nid d'abeille est une âme en nid d'abeille pliée.

6. Panneau selon l'une quelconque des revendications précédentes, dans lequel l'âme en nid d'abeille est fabriquée à partir d'une feuille qui est composée d'un polymère thermoplastique et/ou d'un polymère élastomère thermoplastique.

7. Panneau selon l'une quelconque des revendications précédentes, dans lequel un renforcement supplémentaire est appliqué aux joints entre les âmes en nid d'abeille, dans lequel
le renforcement supplémentaire est fourni par un film thermoplastique ou un film adhésif thermoplastique qui a une boucle en excès entre des bords adjacents des âmes en nid d'abeille, ou dans lequel le renforcement supplémentaire est un moyen d'assurer le transfert de forces de cisaillement dans les âmes en nid d'abeille, ou
dans lequel le renforcement supplémentaire est un film thermoplastique ou un film adhésif thermodurcissable ou une couche d'aluminium revêtue de thermoplastique qui permet le chauffage par induction de la couche d'aluminium, ou
dans lequel le renforcement supplémentaire s'affaisse entre les âmes en nid d'abeille avant d'achever un processus adhésif, optionnellement par pression et chaleur.

8. Équipement pour la production continue d'un panneau sandwich en nid d'abeille renforcé stratifié à partir d'une pluralité d'âmes en nid d'abeille en tant que matériau d'entrée, chacune des âmes en nid d'abeille ayant deux surfaces principales opposées, une de chaque côté de chacune des âmes en nid d'abeille, l'équipement comprenant:
un premier convoyeur pour transporter le matériau d'entrée vers un stratifieur dans une première direction de machine, un entrepôt pour stocker des premières couches de peau qui sont une première couche de renforcement en fibres à 0°,
un stratifieur pour stratifier par soudage thermoplastique, les premières couches de peau, une première couche de peau étant stratifiée sur chaque surface principale de chacune des âmes en nid d'abeille pour former une âme en nid d'abeille stratifiée, la première couche de renforcement en fibres à 0° ayant des fibres qui s'étendent dans une première direction de machine, une découpeuse pour découper les âmes en nid d'abeille stratifiées pour former des premier et second panneaux intermédiaires ayant des bords continus et droits,
une détoureuse pour détourer des bords opposés des premier et second panneaux intermédiaires afin d'exposer des liaisons de bord,
un second convoyeur ayant une seconde direction de machine à 90° par rapport à la première direction de machine, pour recevoir les âmes en nid d'abeille en couches sans faire tourner les âmes en nid d'abeille en couches,
des moyens pour joindre une première âme en nid d'abeille en couches à une seconde âme en nid d'abeille en couches en production continue pour former un joint des première et seconde âmes en nid d'abeille avec un renforcement au niveau du joint des première et seconde âmes en nid d'abeille en couches, le renforcement au niveau du joint comprenant un ou plusieurs parmi : chevauchement ou interpénétration des bords des panneaux intermédiaires adjacents ou utilisation de couches adhésives ou de boucles d'adhésif pour coller le premier panneau intermédiaire au second panneau intermédiaire à un joint bout à bout, avec application optionnelle d'une force de compression en ligne sur les liaisons de bord des premier et second panneaux intermédiaires ou achèvement d'un joint bout à bout adhésif,
un second entrepôt pour stocker des secondes couches de peau ayant une seconde couche de renforcement en fibres à 0° avec référence à la seconde direction de machine, l'application étant sur chaque côté de chacune des âmes en nid d'abeille stratifiées, et
un second stratifieur pour stratifier par soudage thermoplastique, les secondes couches de peau, une seconde couche de peau étant stratifiée sur chaque surface principale de chacune des âmes en nid d'abeille stratifiées pour former une âme en nid d'abeille stratifiée, la seconde couche de renforcement en fibres à 0° ayant des fibres qui s'étendent dans la seconde direction de machine.

9. Un procédé de production continue d'un panneau sandwich en nid d'abeille renforcé stratifié à partir d'une pluralité d'âmes en nid d'abeille en tant que matériau d'entrée, chacune des âmes en nid d'abeille ayant deux faces principales opposées, une de chaque côté de chacune des âmes en nid d'abeille, le procédé comprenant :
appliquer et stratifier, par soudage thermoplastique, des premières couches de peau ayant une première couche de renforcement en fibres à 0°, une première couche de peau étant stratifiée sur chaque surface principale de chacune des âmes en nid d'abeilles pour former une âme en nid d'abeilles stratifié, la première couche de renforcement en fibres à 0° ayant des fibres qui s'étendent dans une première direction de machine,
couper les âmes en nid d'abeilles stratifiés pour former des premiers et seconds panneaux intermédiaires ayant des bords continus et droits,
détourer des bords opposés des premier et second panneaux intermédiaires pour exposer les liaisons de bord,
faire tourner la première direction de machine de 90° résultant en une seconde direction de machine, sans faire tourner les panneaux intermédiaires,
joindre un premier panneau intermédiaire à un second panneau intermédiaire en production continue pour former un joint des premier et second panneaux intermédiaires avec un renforcement au niveau du joint des premier et second panneaux intermédiaires, le renforcement comprenant un ou plusieurs éléments parmi :
faire se chevaucher ou s'interpénétrer des bords de panneaux intermédiaires adjacents ou utiliser des couches adhésives ou des boucles d'adhésif pour coller le premier panneau intermédiaire au second panneau intermédiaire au niveau d'un joint bout à bout, avec application optionnelle d'une force de compression en ligne sur les liaisons de bord des premier et second panneaux intermédiaires ou achèvement d'un joint bout à bout adhésif, et
appliquer et stratifier par soudage thermoplastique, des secondes couches de peau avec un second renforcement en fibres à 0° sur les premier et second panneaux intermédiaires joints, une seconde couche de peau étant stratifiée sur chaque surface principale des premier et second panneaux intermédiaires pour former une âme en nid d'abeille renforcée stratifiée dans laquelle la direction des fibres des secondes couches de peau est de 90° par rapport à la direction des fibres des premières couches de peau sur chaque âme en nid d'abeille renforcée stratifiée.

10. La méthode selon la revendication 9, dans laquelle le détourage des bords opposés pour exposer des liaisons de bord est effectué avant l'étape de découpe, après l'étape de découpe, en même temps que l'étape de découpe.

11. Procédé selon la revendication 9 ou 10, dans lequel les âmes en nid d'abeille ont des cellules polygonales en un réseau, les cellules polygonales ayant des parois de cellule avec une longueur de paroi de cellule entre les sommets d'un polygone, et de l'interpénétration de liaisons de bord des premier et second panneaux intermédiaires est jusqu'à une longueur de paroi de cellule.

12. Procédé selon l'une quelconque des revendications précédentes, comprenant en outre l'étape de joindre les premières couches de renforcement en fibres à 0° à un emplacement où des panneaux intermédiaires adjacents s'interpénètrent.

13. Procédé selon l'une quelconque des revendications précédentes, dans lequel l'âme en nid d'abeille est une âme en nid d'abeille pliée.

14. Procédé selon l'une quelconque des revendications précédentes, dans lequel un renforcement supplémentaire est appliqué aux joints entre les âmes en nid d'abeille.

15. Procédé selon la revendication 14, dans lequel le renforcement supplémentaire est fourni par un film thermoplastique ou un film adhésif thermoplastique qui est appliqué avec une boucle en excès entre des bords adjacents d'âmes en nid d'abeille stratifiées, ou
dans lequel le renforcement supplémentaire est un moyen d'assurer le transfert des forces de cisaillement dans les âmes en nid d'abeille, ou
dans lequel le renforcement supplémentaire est un film thermoplastique ou un film adhésif thermodurcissable ou une couche d'aluminium revêtue de thermoplastique qui permet du chauffage par induction de la couche d'aluminium, ou
dans lequel le renforcement supplémentaire s'affaisse entre les âmes en nid d'abeille avant d'achever un processus adhésif, optionnellement par pression et chaleur.
